# EUROPÄISCHE PATENTANMELDUNG

(11) **EP 0 825 407 A2**
(43) Veröffentlichungstag der Anmeldung: **25.02.1998**
(21) Anmeldenummer: 97113617.1
(22) Anmeldetag: 07.08.1997
(51) Int. Cl.: F28F 25/08

(54) **Einbauelement für Wärmetauscher**

(30) Priorität: 10.08.1996 DE 29613862 U
(71) Anmelder: 2H KUNSTSTOFF GmbH, D-48493 Wettringen (DE)
(72) Erfinder: Hagemann, Franz-Josef, 48607 Ochtrup (DE)
(74) Vertreter: Schulze Horn & Partner

(57) **Zusammenfassung**

Die Erfindung betrifft ein Einbauelement für Wärmetauscher, bestehend aus mehreren miteinander verbundenen flachen gitterartigen Körpern (1, 1'), wobei das Einbauelement von einem flüssigen und einem gasförmigen Medium im Gegenstrom und/oder Kreuzstrom durchströmbar ist und wobei im Einbauzustand des Einbauelementes die Körper (1, 1') in parallelen vertikalen Ebenen angeordnet sind und das flüssige Medium in Richtung von oben nach unten strömt.

Das neue Einbauelement ist dadurch gekennzeichnet,
- daß jeder Körper (1, 1') einen allgemein rechteckigen Umriß aufweist,
- daß jeder Körper (1, 1') an zwei einander gegenüberliegenden Kanten jeweils mindestens einen durchgehenden Randstreifen (2, 2') aufweist,
- daß die Randstreifen (2, 2') durch eine Vielzahl von Rieselstegen (3) verbunden sind,
- daß mindestens jeder zweite der Körper (1, 1') im Einbauelement quer oder schräg zu seinen Randstreifen (2, 2') durchgehend verlaufende Wellungen oder Faltungen (4) aufweist und
- daß die Körper (1, 1') miteinander an sich berührenden Bereichen (41) zumindest in den Randstreifen (2, 2') zu dem Einbauelement verbunden sind.

## Beschreibung

Die vorliegende Erfindung betrifft ein Einbauelement für Wärmetauscher, nach dem Oberbegriff des Anspruchs 1.

Ein derartiges Einbauelement ist aus der DE 41 11 451 A1 bekannt. Das dort beschriebene Rieseleinbauelement für Kühltürme besteht aus einer Anzahl von gitterartigen Körpern aus Kunststoff, die miteinander zu einem paketartigen Element verbunden sind, dem das zu kühlende Wasser von oben durch eine Verteileinrichtung aufgegeben wird und das von der Kühlluft im Gegen- und/oder Kreuzstrom durchströmt wird. Um die Herstellung und Montage derartiger Rieseleinbauelemente zu vereinfachen und zu verbilligen, ist das Element aus rohrförmigen Gitterkörpern gebildet, die mit einer der Elementhöhe bzw. Elementbreite entsprechenden Länge von einem kontinuierlich hergestellten, durch sich kreuzende Stränge gebildeten Rohr abgetrennt, einander berührend zum Paket zusammengefügt und mindestens an ihren Stirnflächen miteinander verbunden sind.

Nachteilig bei dem bekannten Rieseleinbauelement ist, daß das von oben nach unten strömende Wasser durchgehende Strömungspfade vorfindet, so daß es einerseits zu einem relativ geringen Wärmeaustausch zwischen Wasser und Luft und andererseits zu einer Ablagerung von Verunreinigungen aus dem Wasser an dem Element kommt, letzteres insbesondere wenn Flußwaser als Kühlwasser verwendet wird. Eine Reinigung des bekannten Rieseleinbauelements ist nach dem Einbau in einen Kühlturm praktisch unmöglich.

Aus der EP 0 554 471 B1 ist ein Einbauelement für Wärmetauscher, Stoffaustauscher oder Bioreaktorsysteme bekannt, wobei das Element entlang von darin gebildeten Strömungswegen von zwei in Austausch oder Reaktion miteinander tretenden fluiden Medien im Gegen- oder Kreuzgegenstrom durchströmbar ist, wobei das Element eine Eintrittsseite und eine Austrittsseite für das erste Medium und eine Eintrittsseite und eine Austrittsseite für das zweite Medium aufweist, wobei das Element aus mindestens zwei aufeinander befestigten Wänden aus thermoplastischer Kunststoffolie besteht, wobei die Wände jeweils als gewellte Flächen mit im wesentlichen parallel laufenden Scheitelbereichen und Sohlenbereichen gestaltet sind, wobei in den Scheitel- und Sohlenbereichen Befestigungsstellen angeordnet sind und wobei zwei benachbarte, aufeinander befestigte Wände derart zueinander angeordnet sind, daß die Ausrichtungen der Scheitel- und Sohlenbereiche einen Winkel β zueinander bilden, wobei das Einbauelement in Strömungsrichtung des einen der zwei fluiden Medien gesehen aus modular hintereinander geschalteten Elementabschnitten besteht, wobei sich jeweils von einem Elementabschnitt zum nächstfolgenden Elementabschnitt das Strömungsverhältnis zwischen den beiden fluiden Medien von Gegenstrom mit einem Winkel β = 0 in Kreuzgegenstrom mit einem Winkel β ≠ 0 oder umgekehrt ändert.

Bei dem obigen Einbauelement sind ebenfalls nachteilig durchgehende, dem Wärmeaustausch hinderliche Strömungswege vorhanden, da glatte Flächen vorliegen. Auch besteht hier wieder der nachteilige Umstand, daß sich mit der Zeit Verunreinigungen in den Strömungswegen ansammeln und den Wärmeübergang verschlechtern.

Es ist die Aufgabe der vorliegenden Erfindung, ein gattungsgemäßes Einbauelement derart zu verbessern, daß es einen intensiven Wärmeaustausch bietet und daß es nicht zu einer Ablagerung von Verunreinigungen aus dem flüssigen Medium kommt.

Die Lösung der Aufgabe erfolgt erfindungsgemäß durch ein gattungsgemäßes Einbauelement mit den kennzeichnenden Merkmalen des Anspruchs 1.

Durch die erfindungsgemäßen Merkmale des Einbauelementes wird die vorteilhafte Wirkung erzielt, daß die Flüssigkeit wiederholt von den Rieselstegen abtropft, weil keine durchgehenden großflächigen Strömungspfade vorliegen. Damit wird sowohl ein geschlossener Wasserstrom mit geringer Oberfläche und damit geringer Kühlleistung als auch eine Ansammlung von Verunreinigungen in dem Einbauelement vermieden. Vielmehr kommt es häufig zu einem Abtropfen, wobei jeder Aufprall eines Flüssigkeitstropfens zu dessen Zerstäubung führt, was eine große Flüssigkeitsoberfläche und somit eine hohe Kühlleistung ergibt.

Die durchgehenden Randstreifen sorgen für die nötige mechanische Stabilität der gitterförmigen Körper an sich und auch des daraus zusammengefügten Einbauelementes. Dabei stellen die Randstreifen ausreichend Material zur Verfügung, um dort eine Verbindung der einzelnen Körper miteinander zu dem Einbauelement mit ausreichender Haltbarkeit herzustellen oder anzubringen.

In einer ersten bevorzugten Ausführung des Einbauelementes ist vorgesehen, daß in seinem Einbauzustand die Randstreifen in Horizontalrichtung verlaufen. Die Randstreifen der einzelnen Körper des Einbauelementes bilden dabei eine ebene Oberseite und Unterseite des Einbauelementes, so daß problemlos mehrere Einbauelemente übereinander gestapelt werden können, ohne daß dabei eine Gefahr eines Kippens des Stapels auftritt.

Bevorzugt ist das Einbauelement bei der horizontalen Ausrichtung der Randstreifen in seinem Einbauzustand auf seinen unteren Randstreifen stehend gehaltert. Innerhalb z.B. eines Kühlturmes können so auf einem oder mehreren Zwischenböden sehr schnell und einfach die Einbauelemente aufgestellt werden, was eine zeitsparende Installation der Einbauelemente innerhalb des Kühlturmes ermöglicht.

Eine alternative Ausführung des Einbauelementes sieht vor, daß an den einander gegenüberliegenden Kanten jedes Körpers jeweils ein Paar von zwei im Abstand Parallel zueinander geradlinig verlaufenden Randstreifen angeordnet ist, wobei jeweils der eine Randstreifen eines Paares in Höhe der Wellungs- oder Faltungstäler und der andere Randstreifen desselben Paares in Höhe der Wellungs- oder Faltungsberge verläuft. Bei dieser Ausführung laufen also an jeder der beiden gegenüberliegenden zwei Kanten des Körpers zwei Randstreifen, wobei die Randstreifen die Wellung oder Faltung nicht mitmachen. Hierdurch wird ein in seinem Randbereich besonders stabiler Körper geschaffen, der auch zu einem entsprechend stabilen und belastbaren Einbauelement führt.

Weiterhin ist in diesem Zusammenhang bevorzugt vorgesehen, daß im Einbauzustand dieses Einbauelementes die Randstreifen in Vertikalrichtung verlaufen.

Dabei ist weiterhin vorteilhaft vorgesehen, daß dieses Einbauelement in seinem Einbauzustand am oberen Ende seiner Randstreifen hängend gehaltert ist. Eine solche hängende Halterung ist hier problemlos möglich, weil die Randstreifen die Wellung oder Faltung nicht mitmachen und so im Bereich der Randstreifen auch keine Längung der Körper durch Glattziehen der Wellung oder Faltung infolge von Schwerkraft auftreten kann. Damit bleibt jeder Körper und auch das daraus hergestellte Einbauelement auch bei hängender Halterung absolut dimensionsstabil. Hierdurch können vorteilhaft Zwischenböden innerhalb eines Kühlturmes eingespart werden, da die Einbauelemente aufgrund der Möglichkeit der hängenden Halterung an ohnehin vorhandenen Konstruktionen für die Verteilung der zu kühlenden Flüssigkeit über den Querschnitt des Kühlturmes mit angebracht werden können.

Um die Stabilität des Einbauelements mit den darin enthaltenden gitterartigen Körpern weiter zu erhöhen, ist vorteilhaft vorgesehen, daß zumindest ein weiterer, durchgehender, parallel beabstandet zu den beiden Randstreifen im Körper verlaufender Mittelstreifen vorhanden ist. Vorteilhaft wird dadurch auch ein weiterer Verbindungsbereich zwischen den benachbarten Körpern zur Verfügung gestellt.

Zweckmäßig sind die Randstreifen und gegebenenfalls Mittelstreifen benachbarter Körper durch Verschweißungs- oder Verklebungspunkte oder Klemmelemente miteinander verbunden. Die Verschweißungs- oder Verklebungspunkte können leicht in automatischen Anlagen erzeugt werden, was zu einer rationellen Herstellung der Einbauelemente beiträgt.

Zur noch weiteren Vergrößerung der Flüssigkeitsoberfläche und zur weiteren Stabilitätsverbesserung verlaufen die Rieselstege vorzugsweise wellen- oder zickzackförmig und sind benachbarte Rieselstege im Körper bevorzugt durch Verbindungsstege verbunden, die jeweils beabstandet von den Spitzen der Wellen- oder Zickzackform der Rieselstege ausgehen. Damit wird die Ausbildung vieler und unterschiedlicher Strömungspfade gefördert, was zu einem guten Wärmeaustausch zwischen Luft und Flüssigkeit beiträgt. Die Spitzen benachbarter Rieselstege können einander zugewandt sein, wodurch das Abtropfen weiter begünstigt wird.

Als alternative Ausgestaltung ist zweckmäßig vorgesehen, daß die Rieselstege aus parallel zu den Wellungen oder Faltungen verlaufenden Hauptstegen und aus schräg und/oder quer dazu verlaufenden Nebenstegen gebildet sind. Damit wird, wie bei den vorher beschriebenen Rieselstegen, ebenfalls die Bildung von Strömungspfaden vermieden und ein Wärmeaustausch zwischen Flüssigkeit und Luft gefördert.

Vorteilhaft sind die Körper jeweils einstückig aus Kunststoff durch spanlose Formung hergestellt. Die Körper sind dadurch leicht, haltbar und kostengünstig.

Besonders günstig ist die Fertigung der Körper als Spritzgußteile, weil sich so problemlos auch Körper mit paarweise angebrachten Randstreifen an den Kanten einstückig herstellen lassen. Ausführungsbeispiele der Erfindung werden nunmehr anhand einer Zeichnung näher beschrieben. Die Figuren der Zeichnung zeigen:
- Figur 1: eine Teil-Ansicht eines ersten gitterartigen Körpers,
- Figur 2: eine Draufsicht auf drei miteinander verbundene gitterartige Körper, entsprechend der Blickrichtung II in Figur 1,
- Figur 3: eine Teil-Ansicht eines zweiten gitterartigen Körpers und
- Figur 4: den gitterartigen Körper aus Figur 2 zusammen mit einem angedeuteten weiteren, verbundenen Körper, in einer Seitenansicht entsprechend der Blickrichtung IV in Figur 3,
- Figur 5: eine Ausführungsform mit oberflächenerhöhenden anders geformten Wellungen und
- Figur 6: eine Seitenansicht einer anders geformten Ausführung.

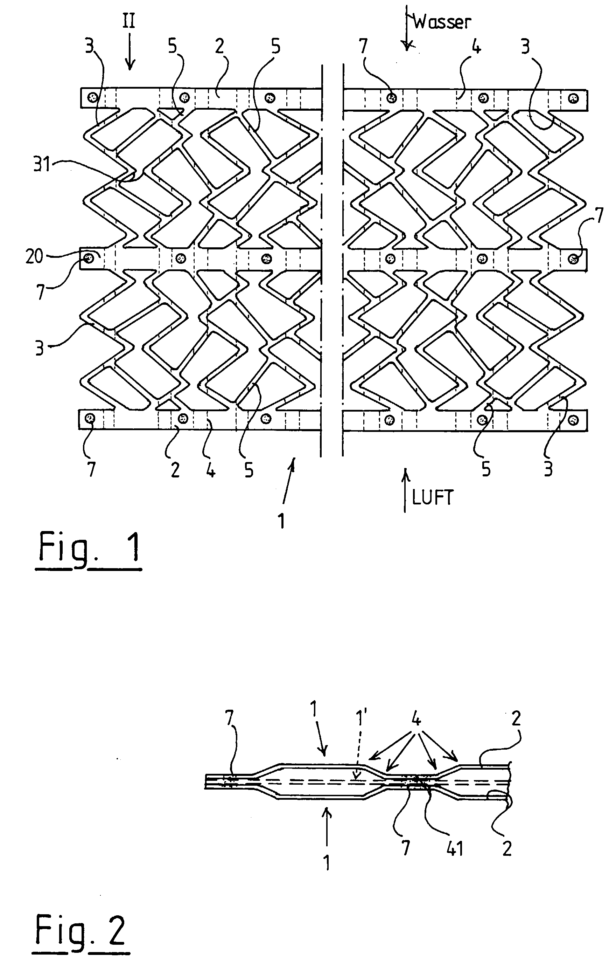

Figur 1 zeigt einen ersten gitterartigen Körper 1, der einen allgemein rechteckigen Umriß aufweist. Er ist in einer vertikalen Ebene angeordnet und weist an seinen beiden in Horizontalrichtung oben und unten verlaufenden Kanten jeweils einen nicht durchbrochenen Randstreifen 2 auf. Bei der gezeigten Ausgestaltung verläuft parallel zu den beiden Streifen 2 in der Mitte des gitterartigen Körpers 1 ein weiterer durchbrechungsfreier Mittelstreifen 20.

Die Streifen 2 und 20 sind durch mehrere zickzackförmige Rieselstege 3 miteinander verbunden, wobei Spitzen 31 der Rieselstege 3 einander zugewandt sind, aber beabstandet voneinander angeordnet sind.

Je zwei benachbarte Rieselstege 3 sind jeweils durch einen oder zwei schräg verlaufende Verbindungsstege 5 miteinander verbunden. In jedem Falle sind die Verbindungsstege 5 so angeordnet, daß sie beabstandet von den Spitzen 31 der Rieselstege 3 ausgehen und enden.

Weiter sind auch nahe den Randstreifen 2 kürzere Verbindungsstege 5 vorhanden, die die Rieselstege 3 mit dem jeweils benachbarten Streifen 2 verbinden, wobei ebenfalls immer ein Abstand von den Spitzen 31 eingehalten ist. Die Anzahl der Stege 5 kann weitgehend frei gewählt werden und richtet sich nach den Erfordernissen der gewählten Konstruktion.

Zusätzlich ist der gitterartige Körper 1 einschließlich seiner Randstreifen 2 mit einer Wellung oder Faltung 4 versehen, die in Figur 1 durch gestrichelte Linien angedeutet ist. Die Wellung oder Faltung 4 verläuft so, daß sich Lageänderungen der einzelnen Bereiche des Körpers 1 senkrecht zur Zeichnungsebene ergeben. Diese Wellung oder Faltung 4 wird anhand der noch zu beschreibenden Figur 2 wesentlich deutlicher erkennbar.

Der gitterartige Körper 1 ist ein einstückiges Kunststoffteil und seine Herstellung erfolgt zweckmäßig durch spanlose Formung, insbesondere als Spritzgußteil.

Durch die wellenförmige Verformung werden die Abtropfspitzen 31 voneinander entfernt, somit kann der abfallende Tropfen eine Fallgeschwindigkeit erreichen, damit er beim Aufprall zerstäubt. Neben dem Effekt der besseren Richtung erreicht man auch ein Abstreifen der anhaftenden Schmutzpartikel.

Figur 2 zeigt in Draufsicht entsprechend der Blickrichtung II in Figur 1 zwei benachbarte gitterartige Körper 1, wobei deren Randstreifen 2, wie im übrigen auch der gesamte gitterartige Körper 1, die Faltung oder Wellung 4 aufweist, die beim vorliegenden Ausführungsbeispiel, wie gezeigt, in Vertikalrichtung, oder alternativ schräg dazu verläuft. Zwei einander berührende Bereiche 41 von zwei benachbarten Randstreifen 2 sind aneinander anliegend durch Verschweißungs- oder Verklebungspunkte 7 oder Steckverbindungen (Klemmelemente) miteinander verbunden. Aus Übersichtlichkeitsgründen sind nur zwei Körper 1 dargestellt; es versteht sich, daß eine Vielzahl von gitterartigen Körpern 1 jeweils im Bereich ihrer Randstreifen 2 zur Bildung eines insgesamt quaderförmigen Einbauelements miteinander verbunden sind. Zwischen je zwei gewellten Körpern 1 kann ergänzend ein weiterer, aber flacher Körper 1' angeordnet sein, wie in Figur 2 durch eine gestrichelte Linie angedeutet ist.

Die aus den gitterartigen Körpern 1 zusammengesetzten Einbauelemente können beispielsweise in Kühltürmen oder Kläranlagen eingesetzt werden, wozu eine Vielzahl von Einbauelementen neben- und übereinander gestapelt oder gelängt wird. Die übereinander angeordneten Einbauelemente stehen dabei jeweils im Bereich ihrer Randstreifen 2 aufeinander, wo eine besonders hohe Stabilität vorliegt. So können auch hohe Stapel von Einbauelementen ohne zusätzliche zwischenliegende Tragkonstruktionen gebildet werden, zumal die einzelnen Einbauelemente selbst sehr leicht sind.

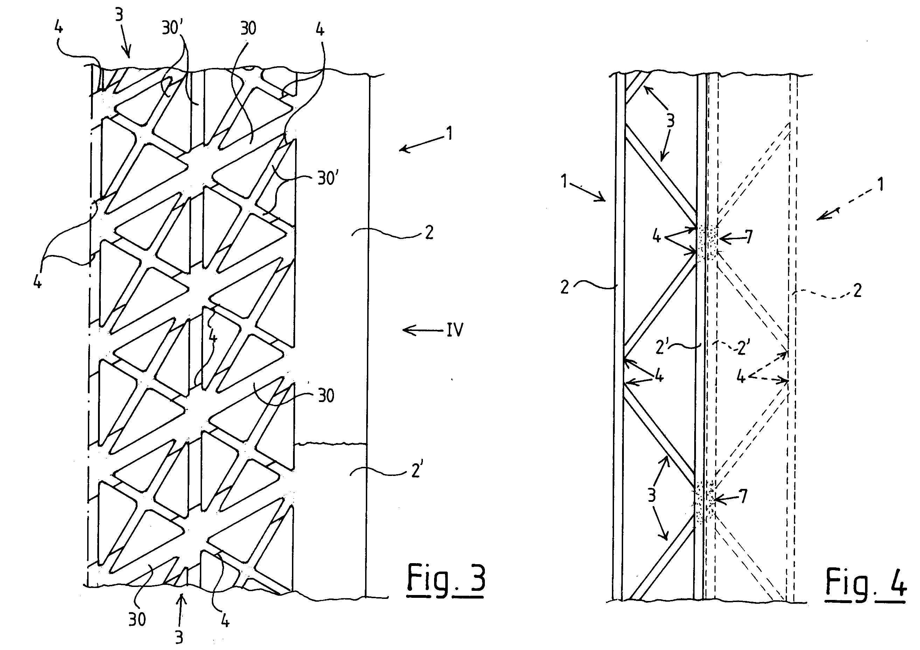

Figur 3 der Zeichnung zeigt einen gitterartigen Körper 1 in einer gegenüber der Figur 1 und Figur 2 geänderten Ausführung. Ein wesentlicher Unterschied besteht darin, daß der Körper 1 gemäß Figur 3 an dem in dem Ausschnitt, den die Figur 3 zeigt, sichtbaren Randbereich zwei parallel zueinander und deckungsgleich übereinander verlaufende Randstreifen 2, 2' aufweist. Jeder Randstreifen 2, 2' ist geradlinig durchlaufend ausgeführt, wobei die beiden Randstreifen 2, 2' einen konstanten Abstand voneinander einhalten. Dabei entspricht der Abstand der beiden Randstreifen 2, 2' dem Abstand zwischen den höchsten und den tiefsten Bereichen des übrigen Körpers 1, der, ähnlich wie schon anhand von Figur 1 und 2 beschrieben, außerhalb seiner Randstreifen 2, 2' aus einer Vielzahl von Rieselstegen 3 besteht, die eine Wellung oder Faltung 4 aufweisen. In dem Ausführungsbeispiel des Körpers 1 gemäß Figur 3 verlaufen die Wellungen oder Faltungen in einer schrägen Richtung relativ zu den Randstreifen 2, 2', wobei sie im vorliegenden Ausführungsbeispiel als von rechts oben nach links unten verlaufend dargestellt sind.

Diese Ausführung wird vorwiegend im Klärbereich als Tropfkörper Anwendung finden, ist aber auch im Kühlturmbereich einsetzbar.

Die Rieselstege 3 sind durch einerseits Hauptstege 30 und andererseits Nebenstege 30' gebildet. Die Hauptstege 30 verlaufen in Richtung der Wellung oder Faltung 4 und bilden abwechselnd jeweils das Wellungs- oder Faltungstal und den Wellungs- oder Faltungsberg.

Die Nebenstege 30' verlaufen in von den Hauptstegen 30 abweichenden Richtungen, wobei im vorliegenden Ausführungsbeispiel ein Teil der Nebenstege 30' parallel zu den Randstreifen 2, 2', allerdings gewellt verläuft, während weitere Nebenstege 30' diagonal durch die jeweils von den Hauptstegen 30 und den erstgenannten Nebenstegen 30' gebildeten parallelogrammförmigen Durchbrechungen verlaufen.

Auf diese Weise wird ein leichtes, aber andererseits stabiles Gitter gebildet, das bei einem von oben nach unten durchrieselnden Flüssigkeitsstrom für eine große Flüssigkeitsoberfläche zur Gewährleistung eines guten Wärmeaustausches mit einem entgegengesetzt geführten Luftstrom sorgt. Der Aufbau eines solchen gitterartigen Tropfkörpers in Kläranlagen hat insbesondere den Vorteil, daß durch Anwachsen der Biomasse die Oberfläche drastisch vergrößert wird und somit eine Leistungserhöhung erfolgt. Bei herkömmlichen Folientropfkörpern, welche Hohlkanäle bilden, ist dieses gegenteilig.

Ein weiteres Charakteristikum des gitterartigen Körpers 1 gemäß Figur 3 besteht darin, daß im Einbauzustand dessen Randstreifen 2, 2' in Vertikalrichtung verlaufen. Dies erlaubt eine hängende Anbringung der aus jeweils mehreren Körpern 1 gebildeten Einbauelemente, z.B. an einer in einem Kühlturm ohnehin vorhandenen Konstruktion zur Verteilung von Kühlwasser über den Querschnitt des Kühlturms. Damit können zusätzliche Zwischenböden für eine stehende Aufstellung der Einbauelemente im Kühlturm eingespart werden. Durch den geradlinigen vertikalen Verlauf der Randstreifen 2, 2' kann eine Längenveränderung der Einbauelemente nicht auftreten, obwohl sämtliche Körper 1 im Bereich ihrer Rieselstege 3 mit einer Wellung oder Faltung 4 versehen sind.

An dem in Figur 3 nicht dargestellten, den sichtbaren Randstreifen 2, 2' gegenüberliegenden Rand sind in gleicher Weise zwei deckungsgleiche Randstreifen 2, 2' vorgesehen; ergänzend besteht die Möglichkeit, im Bereich zwischen den links und rechts angeordneten Randstreifen-Paaren 2, 2' Mittelstreifen, dann allerdings nur einzeln, vorzusehen, wie dies beispielsweise anhand von Figur 1 schon beschrieben wurde.

Der gitterartige Körper gemäß Figur 3 wird bevorzugt ebenfalls als Kunststoffteil durch spanlose Fertigung, vorzugsweise als Spritzgußteil hergestellt, wobei eine Entformung im Bereich der Rieselstege 3 nach oben und unten und im Bereich der linken und rechten Randstreifen-Paare 2, 2' jeweils nach links und rechts erfolgen kann.

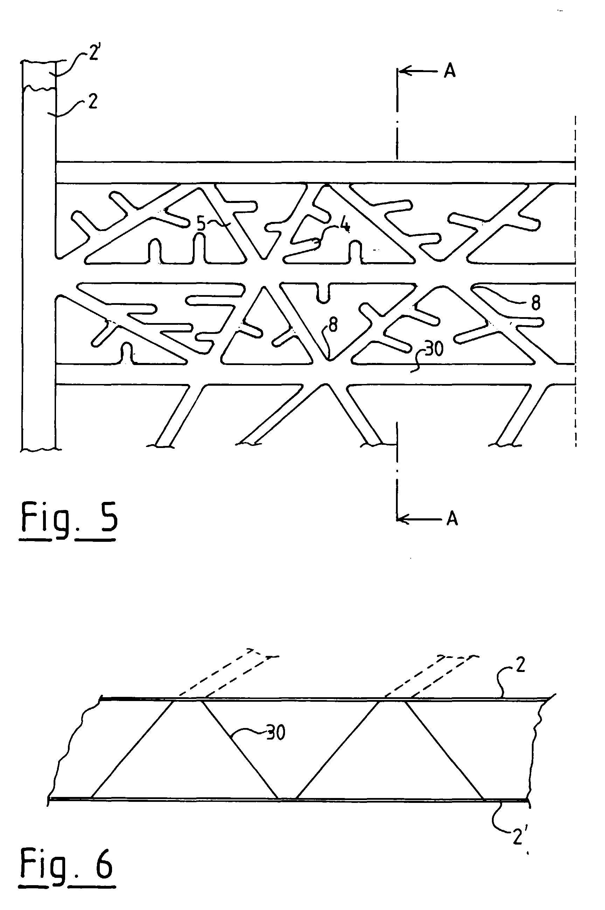

Figur 4 der Zeichnung schließlich zeigt den Körper 1 aus Figur 3 in einer Seitenansicht gemäß der Blickrichtung IV in Figur 3. Im rechten Teil der Figur 4 ist zusätzlich ein zweiter gitterartiger Körper 1 in gestrichelten Linien angedeutet, um zu veranschaulichen, wie mehrere gitterartige Körper 1 zu einem größeren Einbauelement miteinander verbunden werden.

Bei dem in der Figur 4 links dargestellten gitterartigen Körper 1 sind besonders deutlich die beiden parallel zueinander mit konstantem Abstand verlaufenden Randstreifen 2, 2' des Randstreifen-Paares erkennbar. Zwischen den beiden Randstreifen 2, 2' des Körpers 1 ist der Verlauf der den Randstreifen 2, 2' am nächsten liegenden Rieselstege 3 erkennbar. Die im Hintergrund liegenden weiteren Rieselstege 3 mit Hauptstegen 30 und Nebenstegen 30' sind aus Gründen der Übersichtlichkeit der Darstellung in Figur 4 nicht eingezeichnet.

Besonders deutlich wird anhand von Figur 4 auch die Wellung oder Faltung der von den Rieselstegen 3 gebildeten Bereiche des Körpers 1, wobei gleichzeitig deutlich wird, daß die beiden Randstreifen 2, 2' einerseits in Höhe der Wellungs- oder Faltungsberge und andererseits in Höhe der Wellungs- oder Faltungstäler verlaufen.

Wie Figur 4 weiter verdeutlicht, ist der in dieser Zeichnungsfigur rechte Körper 1 in einer gewendeten Lage neben den in Figur 4 linken Körper 1 gestellt, so daß jeweils ein Wellungs- oder Faltungstal des einen Körpers 1 auf einen Wellungs- oder Faltungsberg des anderen Körpers 1 trifft, wobei sich die Wellungs- oder Faltungsrichtungen der benachbarten Körper 1 kreuzen.

Da bei dem Körper 1 gemäß Figur 3 und Figur 4 die Randstreifen 2, 2' geradlinig durchlaufen, liegen bei zusammengesetzten Körpern 1 auch immer zwei Randstreifen 2, 2 oder zwei Randstreifen 2', 2' über ihre gesamte Länge aneinander an. Dies bietet eine vorteilhafte Möglichkeit der Anbringung von relativ vielen Verbindungspunkten, wobei im vorliegenden Beispiel für die Verbindung der Körper 1 Schweißpunkte 7 eingesetzt sind. Die Schweißpunkte 7 sind beispielsweise durch Schweißstempel mittels Erhitzung des Materials, aus dem die Körper 1 bestehen, erzeugt. In diesem Fall bestehen die Körper 1 vorzugsweise aus einem thermoplastischen Kunststoff. Alternativ sind hier auch mechanische Verbindungsmittel oder Verklebungspunkte einsetzbar.

## Patentansprüche

1. Einbauelement für Wärmetauscher, bestehend aus mehreren miteinander verbundenen flachen gitterartigen Körpern (1, 1'), wobei das Einbauelement von einem flüssigen und einem gasförmigen Medium im Gegenstrom und/oder Kreuzstrom durchströmbar ist und wobei im Einbauzustand des Einbauelementes die Körper (1, 1') in parallelen vertikalen Ebenen angeordnet sind und das flüssige Medium in Richtung von oben nach unten strömt,
**dadurch gekennzeichnet,**
- daß jeder Körper (1, 1') einen allgemein rechteckigen Umriß aufweist,
- daß jeder Körper (1, 1') an zwei einander gegenüberliegenden Kanten jeweils mindestens einen durchgehenden Randstreifen (2, 2') aufweist,
- daß die Randstreifen (2, 2') durch eine Vielzahl von Rieselstegen (3) verbunden sind,
- daß mindestens jeder zweite der Körper (1, 1') im Einbauelement quer oder schräg zu seinen Randstreifen (2, 2') durchgehend verlaufende Wellungen oder Faltungen (4) aufweist und
- daß die Körper (1, 1') miteinander an sich berührenden Bereichen (41) zumindest in den Randstreifen (2, 2') zu dem Einbauelement verbunden sind.

2. Einbauelement nach Anspruch 1, dadurch gekennzeichnet, daß in seinem Einbauzustand die Randstreifen (2, 2') in Horizontalrichtung verlaufen.

3. Einbauelement nach Anspruch 2, dadurch gekennzeichnet, daß dieses in seinem Einbauzustand auf seinen unteren Randstreifen (2) stehend gehaltert ist.

4. Einbauelement nach Anspruch 1, dadurch gekennzeichnet, daß an den einander gegenüberliegenden Kanten jeweils ein Paar von zwei im Abstand parallel zueinander geradlinig verlaufenden Randstreifen (2, 2') angeordnet ist, wobei jeweils der eine Randstreifen (2) eines Paares in Höhe der Wellungs- oder Faltungstäler und der andere Randstreifen (2') desselben Paares in Höhe der Wellungs- oder Faltungsberge verläuft.

5. Einbauelement nach Anspruch 4, dadurch gekennzeichnet, daß in seinem Einbauzustand die Randstreifen (2, 2') in Vertikalrichtung verlaufen.

6. Einbauelement nach Anspruch 5, dadurch gekennzeichnet, daß dieses in seinem Einbauzustand am oberen Ende seiner Randstreifen (2, 2') hängend gehaltert ist.

7. Einbauelement nach einem der vorhergehenden Ansprüche, dadurch gekennzeichnet, daß zumindest ein weiterer, durchgehender, parallel beabstandet zu den beiden Randstreifen (2, 2') im Körper (1, 1') verlaufender Mittelstreifen (20) vorhanden ist.

8. Einbauelement nach einem der vorhergehenden Ansprüche, dadurch gekennzeichnet, daß die Randstreifen (2, 2') und gegebenenfalls Mittelstreifen (20) benachbarter Körper (1, 1') durch Verschweißungs- oder Verklebungspunkte (7) oder durch Klemmelemente miteinander verbunden sind.

9. Einbauelement nach einem der vorhergehenden Ansprüche, dadurch gekennzeichnet, daß die Rieselstege (3) wellen- oder zickzackförmig verlaufen und daß benachbarte Rieselstege (3) im Körper (1, 1') durch Verbindungsstege (5) verbunden sind, die jeweils beabstandet von den Spitzen (31) der Wellen- oder Zickzackform der Rieselstege (3) ausgehen.

10. Einbauelement nach einem der Ansprüche 1 bis 8, dadurch gekennzeichnet, daß die Rieselstege (3) aus parallel zu den Wellungen oder Faltungen (4) verlaufenden Hauptstegen (30) und aus schräg und/oder quer dazu verlaufenden Nebenstegen (30') gebildet sind.

11. Einbauelement nach einem der vorhergehenden Ansprüche, dadurch gekennzeichnet, daß die Körper (1, 1') jeweils einstückig aus Kunststoff durch spanlose Formung hergestellt sind.

12. Einbauelement nach Anspruch 11, dadurch gekennzeichnet, daß die Körper (1, 1') Spritzgußteile sind.
